(19) Europäisches Patentamt
European Patent Office
Office européen des brevets

(11) **EP 2 273 706 B1**

(12) **EUROPEAN PATENT SPECIFICATION**

(45) Date of publication and mention
of the grant of the patent:
**30.05.2012 Bulletin 2012/22**

(51) Int Cl.:
*H04J 3/06* (2006.01)    *H04L 12/56* (2006.01)
*H04L 12/24* (2006.01)

(21) Application number: **09290522.3**

(22) Date of filing: **30.06.2009**

(54) **Synchronization packet-delay-variation dampening (SPD)**

Synchronisationspaketverzögerungsveränderungsabschwächung

Amortissement de variation de retard de paquets de synchronisation

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**12.01.2011 Bulletin 2011/02**

(73) Proprietor: **Alcatel Lucent**
**75007 Paris (FR)**

(72) Inventors:
• **Bui, Dinh Thai**
**92290 Chatenay-Malabry (FR)**
• **Le Pallec, Michel**
**91300 Massy (FR)**

(74) Representative: **Croonenbroek, Thomas Jakob et al**
**Cabinet Innovincia**
**11, Avenue des Tilleuls**
**74200 Thonon-les-Bains (FR)**

(56) References cited:
EP-A- 1 715 607          EP-A2- 1 426 865
WO-A-01/82527          US-A- 5 394 395
US-A1- 2006 265 386

• MILLS D L: "INTERNET TIME
SYNCHRONIZATION: THE NETWORK TIME
PROTOCOL" IEEE TRANSACTIONS ON
COMMUNICATIONS, IEEE SERVICE CENTER,
PISCATAWAY, NJ, US, vol. 39, no. 10, 1 October
1991 (1991-10-01), pages 1482-1493,
XP000275311 ISSN: 0090-6778

**Description**

The present invention relates to time stamp protocols (e.g. IEEE 1588V2, IETF NTP, etc) used for synchronizing the clocks of network elements (NEs) and/or computer systems over packet switched data networks.

Packet switched networks use time stamp protocols to synchronize a slave clock with a master clock (in term of time-of-day but also in term of phase and frequency). The IETF's Network Time Protocol (NTP) and the IEEE's Precision Time Protocol V2 (PTP) are widely used for carrying out such a synchronization. The NTP is notably based on the Coordinated Universal Time for Internet networks. The NTP v4 provides approximately a 10 milliseconds accuracy over the public Internet. This accuracy is notably limited by the packet delay variation (PDV) and the path delay asymmetry. Network element buffers notably induce variable queuing delays, which leads to packet delay variation: similar synchronization packets face a different transmission time through the network.

The following section takes PTP as an example to illustrate issues encountered by time stamp protocols with regards to packet delay variation and delay asymmetry.

According to the PTP protocol, the following steps are carried out to exchange synchronization messages between a master clock and a slave clock. At time t1 (master timescale), the master clock sends a synchronization message to the slave clock. The synchronization message is received at t2 (slave timescale). The master clock then sends a follow-up message indicating time t1 to the slave clock. Once the follow-up message is received, the slave clock sends a delay request message at time t3 (slave timescale). The delay request message is received by master clock at time t4 (master timescale). The master clock then sends a delay response message indicating time t4 to the slave clock. Once the delay response message is received, the following information is available for the slave clock: times t1, t2, t3 and t4.

The slave clock is dealing with the following equation system with 3 unknown parameters:

$$\left. \begin{array}{l} t_2 = t_1 + d_{MS} + offset_{act} \\ t_4 = t_3 + d_{SM} - offset_{act} \end{array} \right\} (1)$$

Where $d_{MS}$ is the message communication delay from the master clock to the slave clock, $d_{SM}$ is the message communication delay from the slave clock to the master clock, and where $offset_{act}$ is the actual offset of the slave timescale compared to the master timescale.

The actual offset can be defined as follows.

$$offset_{act} = \frac{(t_2 - t_4) - (t_1 - t_3)}{2} - \frac{d_{MS} - d_{SM}}{2}$$

The following value is practically obtained by the slave clock:

$$offset_{measured} = \frac{(t_2 - t_4) - (t_1 - t_3)}{2}$$

The actual offset can also be defined by the following relation:

$$offset_{act} = offset_{measured} - \frac{d_{MS} - d_{SM}}{2} (2)$$

PTP and NTP standards make the assumption that both directions are symmetric and therefore that path delays $d_{MS}$ and $d_{SM}$ are identical.

In practice, Offset$_{measured}$ follows the following relation:

$$offset_{measured} = offset_{act} + \frac{PDV_{MS} - PDV_{SM}}{2} + \frac{Delay\_Asymmetry}{2} (3)$$

Where:

- $PDV_{MS}$ is the packet delay variation (with regard to a reference delay which could be a min delay $d_{MS\ min}$, $\boldsymbol{PDV_{MS}} = \boldsymbol{d_{MS}} - \boldsymbol{d_{MS\ min}}$ (4)) encountered by a packet traveling from the Master to the Slave.

- $PDV_{SM}$ is the packet delay variation (with regards to a reference delay which could be a min delay $\boldsymbol{d_{SM\ min}}$, $\boldsymbol{PDV_{SM}} = \boldsymbol{d_{SM}} - \boldsymbol{d_{SM\ min}}$ (5)) encountered by a packet traveling from the Slave to the Master.

- $\boldsymbol{Delay\_Asymmetry}$ is the path delay asymmetry.

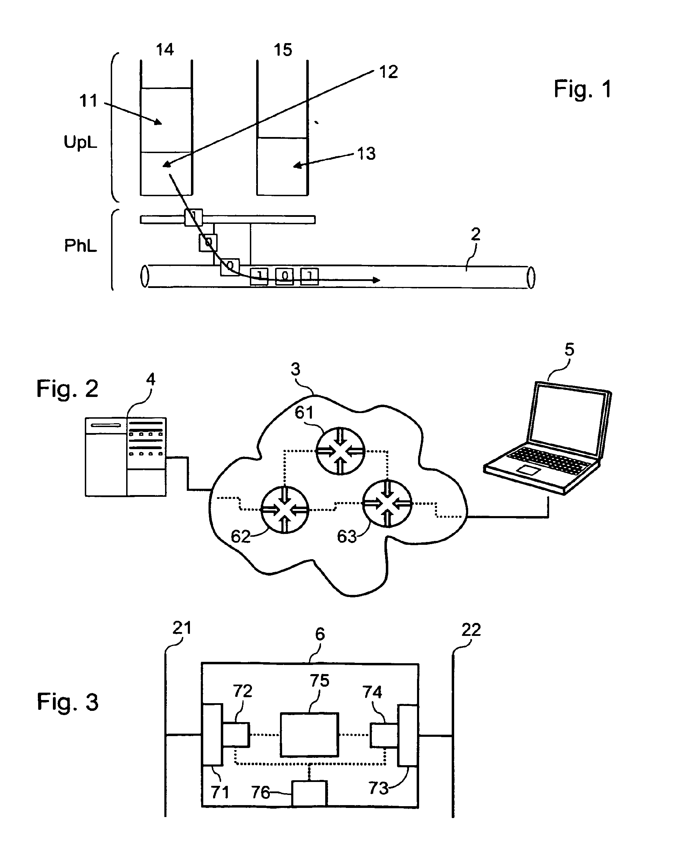

Relation (3) quantifies the effect of packet delay variation and delay asymmetry on the PTP protocol accuracy.
It is to note that we can define $PDV_{MS}$ and $PDV_{SM}$ in equation (3) as respectively the sum of all the minimum delays from the Master to the Slave and from the Slave to the Master, related to transmission links, packet switching and buffering (minimum delay due to minimum buffer loads). In this case, the asymmetry as defined by $\boldsymbol{Delay\_Asymmetry} = \boldsymbol{d_{MS\ min}} - \boldsymbol{d_{SM\ min}}$ can be considered as a fixed (and known) value (low or null variation according to the observation time).
The main issue to address is thus the PDV, essentially generated by buffering within the NEs (e.g. switches or routers) along the communication path between the Master and the Slave. In order to minimize the PDV, synchronization packets are often assigned to a high priority QoS (e.g. Premium class as compared to Best-effort one). However in such a context, PDV of synchronization packet is still impacted by other effects that will be detailed as follows:
Indeed, even if a synchronization message has a premium quality of service, it can ultimately be delayed by an earlier best-effort packet currently serialized onto the communication medium. This problem is usually referred to as the "jumbo (best-effort) packet" issue and is illustrated in figure 1. As the size of best-effort packets is not fixed and predictable, large best-effort packets can delay the transmission of the synchronization messages once their transmission is started. In the example, two packets 11 and 12 are stored in a best-effort buffer 14. Packet 12 is a large packet occupying the communication medium 2. An arriving synchronization message 13 is stored in a premium buffer 15. Since the communication medium 2 is already occupied by packet 12, the synchronization message cannot be transmitted immediately.
Moreover, competition between different synchronization messages can also induce a packet delay variation. In particular, if periodic synchronization packet flows (e.g. from different input ports towards the same output port) are sent with very close message rate and with the same quality of service, synchronization messages can delay each other when handled by network equipments. Thus, the packet delay variation can change randomly. This phenomenon is generally called as a "beating effect" (set out in ITU-T G.8261/Y.1361 'Timing and synchronization aspects in packet networks'. May 2006).
To overcome the aforementioned problems, the PTP standard introduced an end-to-end transparent clock (also named E2E TC) concept (respectively Peer-toPeer Transparent Clock, named as P2P TC).
E2E TC is implemented in each network equipment. The actual resident time of each PTP packet inside each network equipment is measured. These times are reported to the slave clock in a correction field specifically dedicated for this purpose inside the PTP message. Each network equipment updates the resident time in the correction field by adding its own induced resident time. The equation system (1) can then be rewritten as follows:

$$offset_{act} = t_2 - t_1 - CorrectionField - D_{MS\_link}$$

Where $D_{MS\_link}$ is a link delay between the master clock and the slave clock. This delay remains quite deterministic. CorrectionField is the final resident time indicated in the synchronization message received by the slave clock. In practice, the synchronization accuracy is strongly improved.
P2P TC like E2E TC allows the slave to correct the cumulate resident times within network equipments. In addition, it also allows for the slave to correct the cumulate transmission delays across different transmission links by updating the CorrectionField with these transmission delays.
The E2E TC concept has several drawbacks. It cannot be applied to NTP messages since these latter do not have a specific field like the correction field to record and update cumulated resident times. Moreover, the E2E TC requires that each network equipment implements part of the PTP stack in order to modify the correction field and de-encapsulate/re-encapsulate the PTP synchronization messages from/into the transport layer. The E2E TC process implies new hardware features with a significant cost impact either on network equipments or on dedicated external modules. Finally, E2E TC functionalities infringe layer-separation principles which amongst other inconvenient represent a breach in the communication system security.

There is thus a need for a network equipment to overcome these drawbacks.

A network equipment adapted to receive and forward data packets, said equipment comprising at least:

- a packet processing device;
- a communication interface connected to the packet processing device and adapted to be connected to a communication medium, said communication interface comprising a buffer for storing data packets received from or to be transmitted to the communication medium;
- a control device adapted to identify a synchronization packet stored in said buffer and belonging to a given synchronization packet stream, said control device being adapted to keep the synchronization packets of said synchronization packet stream stored inside the buffer during a predetermined period and to output said synchronization packets at the expiry of the predetermined period.

In an embodiment, said predetermined period is at least equal to a percentage of a serialization time of a maximum transmission unit (MTU) of the communication interface. This period is the smallest storage period and is called as the basic storage period in the rest of the present document.

In another embodiment, said predetermined period is at least equal to the serialization time of a maximum transmission unit of the communication interface. This period is the smallest storage period and is called as the basic storage period in the rest of the present document.

In another embodiment, the communication interface managing a quality of service with at least a higher communication priority and a lower communication priority, said predetermined period being at least equal to the serialization time of a maximum transmission unit for a packet having the lower priority.

In another embodiment, said control device is adapted for recording the predetermined period of storage of the synchronization packet in a remote server or network management system.

In another embodiment, said control device is adapted for detecting two conflicting synchronization packet streams (streams competing for the same transmission medium), said control device being additionally adapted for setting different predetermined storage periods for said two synchronization packet streams in order to solve the previous conflicting situation.

In another embodiment, said different predetermined storage periods are set to multiples of a basic storage period.

The invention also relates to a device for recording transmission delays for synchronization packets, comprising at least:

- an interface for communicating with a network equipment and a slave clock;
- a storage area for storing during a predetermined storage period synchronization packets of a given synchronization packet stream in a network equipment;
- a control device for sending said predetermined storage period to the slave clock recipient of said synchronization packets.

The invention also relates to a synchronization packet management process in a network equipment, wherein the synchronization packets of a synchronization packet stream sequentially cross a communication interface between a packet processing device and a communication medium, wherein said synchronization packets are stored in said interface during a predetermined period and are output from said interface at the expiry of said predetermined period.

The advantages of the present invention will become apparent from the following description of one embodiment with reference to the accompanying drawings, in which :

- Figure 1 illustrates a best-effort jumbo packet delaying a high priority synchronization message;
- Figure 2 illustrates schematically a communication network between a master clock and a slave clock;
- Figure 3 illustrates schematically the structure of a network equipment according to an embodiment of the invention;
- Figure 4 is a chronogram illustrating a conflicting situation at a network equipment output port where different input periodic synchronization streams are competing for the same output medium;
- Figure 5 is a chronogram illustrating the management of several conflicting synchronization packet streams;
- Figure 6 illustrates the transmission management of the synchronization packets within the network equipment.

At each communication interface of a network equipment where the aforementioned competitions/issues are observed, the invention proposes to store/buffer/delay each synchronization packet, of a given synchronization stream (see definition later in this document) during a period determined beforehand, and to output each of these synchronization packets at expiry of this predetermined period.

By systematically storing each packet of a given synchronization stream by the same duration/period, the packet delay variation is significantly reduced and the cumulated packet delay between master and slave clocks is much more deterministic. Indeed, the network equipment knows the period during which it has buffered these synchronization packets either at an output or at an input interface or at both. Moreover, the network equipment does not have to de-encapsulate a synchronization packet to update a packet delay value. Thus, the invention can be implemented within network equipments with minor hardware and software modifications and a limited cost increase. The delay can also be handled at the packet level, which significantly simplifies the management process since the network equipment can work on a single layer. Additionally, the invention can be applied to any kind of network timing protocol since no specific data fields are requested in the synchronization packet. Finally, the invention does not infringe layer-separation principles which E2E TCs (as well as P2P TCs) are often blamed for.

Hereafter, a packet stream will designate a flow of packets characterized by a common destination address or a common source address. A synchronization packet stream includes synchronization packets sequentially emitted by a master clock towards a slave clock. The network equipment can be any type of packet switching device like (but not limited to) a router, a switch, a hub, a network bridge or a firewall.

Figure 2 illustrates a master clock 4 and a slave clock 5 communicating with each other through a wide area network 3. Through the use of a time stamped protocol like NTP or PTP, the slave clock 5 will synchronize its system clock with master clock 4, within a required accuracy. Time stamp protocols will trigger synchronization packet exchanges between clocks 4 and 5. These synchronization packets constitute a packet stream across network equipments 61 to 63 within the communication network 3 and connected to each other via communication mediums.

Figure 3 illustrates a network equipment 6 according to an embodiment of the invention. Said network equipment 6 comprises first and second communication interfaces 71 and 73. Interfaces 71 and 73 are connected respectively to communication mediums 21 and 22. Communication interfaces 71 and 73 comprise respectively data packet buffers 72 and 74, designed for storing data packets received from or to be transmitted to the communication mediums 21 and 22. Interfaces 71 and 73 are designed for bidirectional communications respectively with communication mediums 21 and 22. Each of interfaces 71 and 73 uses distinct buffers for ingoing and outgoing packets. Buffers store packets received from communication mediums and output these packets to a processing device 75. These buffers also store packets received from the packet processing device 75 and serialize these packets on the communication mediums. The packet processing device 75 handles the received packets according to the function executed by the network equipment 6. If network equipment 6 is a switch, the packet processing device 75 will forward a packet received on a given communication interface to another appropriate communication interface.

The network equipment 6 further includes a control device 76. The control device 76 is adapted for identifying a synchronization packet stored in buffers 72 and 74 and belonging to a given synchronization stream. The control device 76 controls buffers 72 and 74 in order to store the synchronization packets during a predetermined period in these buffers. When it has stored a synchronization packet during a predetermined period, the buffer outputs this packet. The predetermined period is common to the synchronization packets of the synchronization stream.

The control device 76 can be implemented either as a software or a hardware component. The control device 76 can use a fixed predetermined period or can set the value of the predetermined period by itself (after a learning period).

It is to be noted that the control device can be implemented in a distributed manner, thus as multiples separated modules, one at each communication interface. These modules can collaborate with each other.

The predetermined period should be identical for all the synchronization packets of a same synchronization stream. Thus, the cumulated delay remains constant for each packet of the synchronization stream. A common predetermined period can thereby be recorded in a centralized management system related to a given stream and used by the slave clock for the computation of the offset.

In one possible embodiment, the predetermined period can also be set equal or superior to the serialization time of a maximum transmission unit of the communication interface. Thus, the buffer will be able to output a synchronization packet after the right storage period even if it serializes a large packet on the communication medium when it receives the synchronization packet. For instance, with 1Gbps Ethernet technology, the maximum transmission unit (MTU) is set at 1500 octets and the serialization time of such a MTU is equal to $12\mu s$.

In one possible embodiment, if the network equipment manages quality of service, each communication interface includes at least a buffer for a lower priority (like best effort priority) and a buffer for a higher priority (like premium priority). Synchronization packets will be stored in the higher priority buffer. The predetermined period will be set at least as long as the serialization time of a maximum transmission unit of the lower priority buffer. Indeed, if the lower priority buffer serializes a large packet on the communication medium when a synchronization packet is received in the higher priority buffer, the large packet is already fully output when the synchronization packet has to be serialized at the expiry of the predetermined period.

In one possible embodiment, during the storage period of a synchronization packet in the higher priority buffer (premium), the control device 76 manages the transmission of the packets stored in the lower priority buffer (best-effort). The control device 76 will check the sizes of the best-effort packets sent in-between in order to guarantee that the synchronization packet can be output at the right time. If available, best-effort packets sent in-between can be fragmented in order to increase the number of packets serialized after the entry of the synchronization packet in the buffer. The bandwidth of the communication interface is thereby optimized.

In one possible embodiment, the predetermined period can also be set as a percentage of the serialization time of a MTU, which is particularly appropriate for optimizing the bandwidth when packet fragmentation is not available. The synchronization packet storage is thereby shorter than the MTU serialization time. The predetermined period can be set as a percentage of the MTU serialization time of the lower priority buffer. In this case, best-effort paquet fragmentation can be activated in order to optimize the bandwidth utilization.

When a network equipment uses such a percentage of the MTU serialization time, it cannot guarantee that the synchronization packet can be timely output in all cases. However, the percentage can be chosen to statistically minimize the cases where the serialization of a large best-effort packet will delay the desired output timing of the synchronization packet.

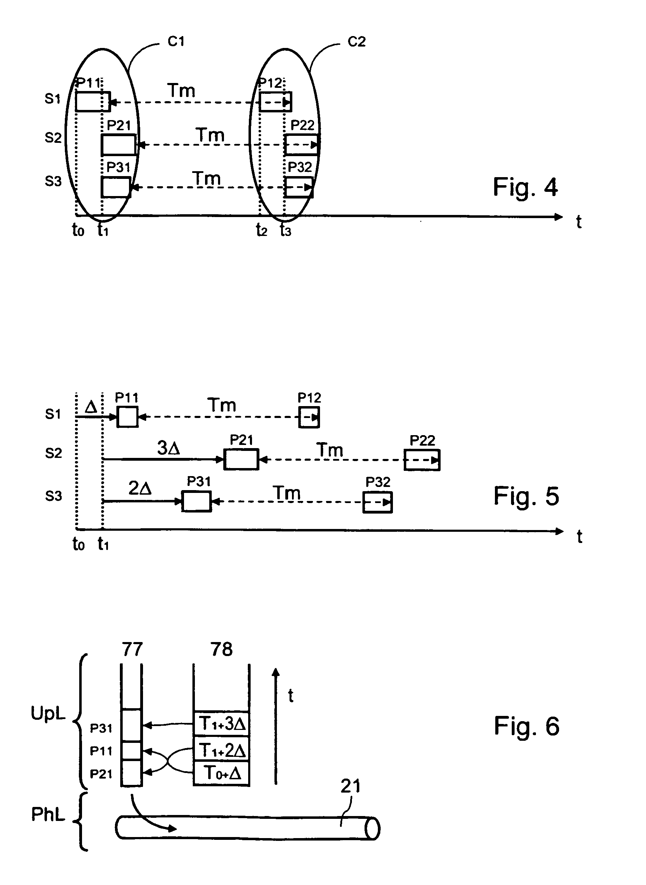

In one possible embodiment, the network equipment 6 can also avoid conflicts among periodic synchronization packet streams received with a close or identical frequency or message rate. These synchronization packet streams will arrive at the buffer of a communication interface quasi simultaneously and the network equipment shall guarantee that all of them can be timely output after their respective buffering period. For instance, after a learning period, the network equipment 6 will determine that several synchronization packet streams are received with a frequency fm=1/Tm.. They are competing with each other at the transmission medium. Figure 4 is a chronogram illustrating a conflicting/ competition situation where periodic synchronization streams are received at an output port with almost an identical frequency fin. The buffer receives packets P11, P21 and P31 respectively at times $t_0$, $t_1$ and $t_1$. Packets P11, P21 and P31 belong respectively to synchronization streams S1, S2 and S3 which have a common fin frequency. Thus, packets P12, P22 and P32 belonging respectively to synchronization streams S1, S2 and S3 are received at times $t_2$, $t_3$ and $t_3$. At that stage, the network equipment 6 determines that streams S1, S2 and S3 use a common frequency fm and that these may enter into conflicting situations such as C1 (packets P11, P21 and P31 competing for the transmission medium) and C2 (packets P21, P22 and P32 competing for the transmission medium).

The network equipment 6 then applies different storage predetermined periods for these conflicting/competing streams. Figure 5 is a chronogram illustrating an embodiment where different predetermined periods are used. Three conflicting synchronization packet streams s1, s2 and S3 are handled by network equipment 6. A packet P11 of stream s1 enters the buffer of the communication interface at time t0. Packets P21 and P31 of streams s2 and S3 enter the buffer at time t1. Packet P11 is stored in the buffer and output after predetermined period Δ (basic storage period). P21 is stored in the buffer and output after predetermined period 2Δ. P31 is stored in the buffer and output after predetermined period 3Δ. As illustrated, packets P11, P21 and P31 are correctly delayed to guarantee their output (e.g. serialization on the medium) without any mutual conflict. Subsequent packets P12, P22 and P32 are stored respectively during Δ, 2Δ and 3Δ in the buffer. Packets P12, P22 and P32 are output a Tm period after respectively packets P11, P21 and P31. If these streams are output to the same downstream network equipment, they shall not be in conflict in this network equipment since they are output with an appropriate offset.

In one possible implementation, to facilitate the calculation of the predetermined period of the synchronization packets in the network equipments, the different predetermined periods used for conflicting streams are multiples of a basic predetermined period Δ (e.g. MTU serialization time).

Figure 6 illustrates a possible management of these streams in a communication interface of the network equipment. For each synchronization packet, the control device records a transmission time descriptor in a table 78. Each transmission time descriptor contains a pointer to a synchronization packet located in buffer 72. Each transmission time descriptor also includes the storage period for the associated synchronization packet. Synchronization packets are output on the communication medium 21 in the order defined by these time descriptors.

The network equipment 6 in Figure.3 is advantageously adapted for recording the predetermined periods of storage of the synchronization packets in a remote server. This remote server can be a centralized management system for recording all the predetermined periods indicated by the network equipments crossed by the synchronization packets of a given synchronization stream. This centralized management system can be consulted by the slave clock in order to get the value of predetermined periods for a given synchronization stream. Alternatively, the centralized management can announce these values to the Slave clock (without a request from the latter). The slave clock can determine the value of the actual offset as follows:

$$offset_{act} = t_2 - t_1 - d_{MS}$$

With $d_{MS} = \sum_i \Delta_{NE_i} + LkTrDel$

$\Delta NE_i$ being the storage period applied in network equipment i and LkTrDel being the overall transmission delay induced by the communication medium between the master clock and the slave clock.

In a possible embodiment, thanks to the information reported by the network equipments, the centralized management system can also compute the maximum synchronization packet rate allowed for the synchronization streams. This maximum rate can notably be calculated based on the number of multiples of a basic predetermined period used. For instance, if we get m synchronization streams and if packets from each synchronization stream i is systematically delay by a predetermined period equal to $n_i$ times the basic predetermined period $\Delta$, then the maximum allowed message rate for each stream will be set at $f_{max} = 1/(n*\Delta)$ with $n = max(n_i)_{i=1,...,m}$. For instance, for 100Mbps Ethernet technology, with a 1500 octets MTU, $\Delta=120\mu s$. With n=10, $f_{max}=833,33$ packets/s, which is far above the usual message rate of the PTP messages (between 16 and 64 packets/s).

In a possible embodiment, to maintain the validity of the predetermined periods of the synchronization streams as long as possible (and thus to limit the incidence of the frequency slip between clocks), the network elements will preferably maximize the time interval between successive packets belonging to different synchronization streams.

All the previous embodiments were disclosed in the case of queuing for outgoing packets. However, the invention can obviously be applied to queuing of entering packets. Predetermined periods can be set at different values according to the direction of a synchronization packet between the master and the slave clocks.

**Claims**

1. A network equipment (6) adapted to receive and forward data packets, said equipment comprising:

   - a packet processing device (75);
   - a communication interface (71, 73) connected to the packet processing device and adapted to be connected to a communication medium (21, 22), said communication interface comprising a buffer (72, 74) for storing data packets received from or to be transmitted to the communication medium;
   - a control device (76) adapted to identify a synchronization packet stored in said buffer and belonging to a given synchronization packet stream, said control device being adapted to keep the synchronization packets of said synchronization packet stream stored inside the buffer during a predetermined period, and to output said synchronization packets at the expiry of the predetermined period, said period being at least equal to a given percentage of the serialization time of a maximum transmission unit of the communication interface.

2. Network equipment (6) according to claim 1, wherein said predetermined period is at least equal to the serialization time of a maximum transmission unit of the communication interface.

3. Network equipment (6) according to claim I, said communication interface managing a quality of service with at least a higher communication priority and a lower communication priority, said predetermined period being at least equal to the serialization time of a maximum transmission unit for a packet having the lower priority.

4. Network equipment (6) according to any one of the preceding claims, wherein said control device is adapted for recording the predetermined period of storage of the synchronization packet in a remote server.

5. Network equipment (6) according to any one of the preceding claims, wherein said control device is adapted for detecting two conflicting synchronisation packet streams, said control device being additionally adapted for setting different predetermined storage periods for said two synchronization packet streams aiming at solving the previous conflicting situation.

6. Network equipment (6) according to claim 6, wherein said different predetermined storage periods are set to multiples of a basic storage period.

7. Network equipment (6) according to any one of the preceding claims, adapted to record the storage period values of synchronisation packets in a remote server.

8. Synchronization packet management process in a network equipment, wherein the synchronization packets of a synchronization packet stream sequentially cross a communication interface between a packet processing device and a communication medium, wherein said synchronization packets are stored in said interface during a predetermined period and are output from said interface at the expiry of said predetermined period, said period being at least equal to a given percentage of the serialization time of a maximum transmission unit of the communication interface.

**Patentansprüche**

1. Netzwerkeinrichtung (6), ausgelegt für den Empfang und das Weiterleiten von Datenpaketen, wobei die besagte Netzwerkvorrichtung umfasst:

   - Eine Paketverarbeitungsvorrichtung (75);
   - eine Kommunikationsschnittstelle (71, 73), welche an die Paketverarbeitungsvorrichtung angeschlossen und für den Anschluss an ein Kommunikationsmedium (21, 22) ausgelegt ist, wobei die besagte Kommunikationsschnittstelle einen Puffer (72, 74) zum Speichern der von dem Kommunikationsmedium empfangenen oder an dieses zu übermittelnden Datenpakete umfasst;
   - eine Steuervorrichtung (76), welche für das Identifizieren eines in dem besagten Puffer gespeicherten und einem gegebenen Synchronisationspaketstrom angehörenden Synchronisationspakets ausgelegt ist, wobei die besagte Steuervorrichtung dazu ausgelegt ist, die Synchronisationspakete des besagten Synchronisationspaketstroms während einer vorgegebenen Zeitdauer im Puffer zu halten und die besagten Synchronisationspakete nach Ablauf der vorgegebenen Zeitdauer auszugeben, wobei die besagte Zeitdauer mindestens gleich einem gegebenen Prozentanteil der Serialisierungszeit einer maximalen Übertragungseinheit der Kommunikationsschnittstelle ist.

2. Netzwerkeinrichtung (6) nach Anspruch 1, wobei die besagte vorgegebene Zeitdauer mindestens gleich der Serialisierungszeit einer maximalen Übertragungseinheit der Kommunikationsschnittstelle ist.

3. Netzwerkeinrichtung (6) nach Anspruch 1, wobei die besagte Kommunikationsschnittstelle eine Dienstgüte mit mindestens einer höheren Kommunikationspriorität und einer niedrigeren Kommunikationspriorität verwaltet, wobei die besagte vorgegebene Zeitdauer mindestens gleich der Serialisierungszeit einer maximalen Übertragungseinheit für ein Packet mit der niedrigeren Priorität ist.

4. Netzwerkeinrichtung (6) nach einem beliebigen der vorstehenden Ansprüche, wobei die besagte Steuervorrichtung für das Erfassen der vorgegebenen Speicherdauer des Synchronisationspakets in einem entfernten Server ausgelegt ist.

5. Netzwerkeinrichtung (6) nach einem beliebigen der vorstehenden Ansprüche, wobei die besagte Steuervorrichtung für das Erkennen von zwei in Konflikt stehenden Synchronisationspaketströmen ausgelegt ist, wobei die besagte Steuervorrichtung zusätzlich für das Einstellen von unterschiedlichen vorgegebenen Speicherdauern für die besagten zwei Synchronisationspaketströme mit dem Ziel, die vorherige Konfliktsituation zu lösen, ausgelegt ist.

6. Netzwerkeinrichtung (6) nach Anspruch 6, wobei die besagten unterschiedlichen vorgegebenen Speicherdauern auf ein Mehrfaches einer grundsätzlichen Speicherungsdauer eingestellt werden.

7. Netzwerkeinrichtung (6) nach einem beliebigen der vorstehenden Ansprüche, ausgelegt für das Erfassen der Speicherdauerwerte von Synchronisationspaketen in einem entfernten Server.

8. Synchronisationspaketverwaltungsprozess in einer Netzwerkeinrichtung, wobei die Synchronisationspakete eines Synchronisationspaketstroms eine Kommunikationsschnittstelle zwischen einer Paketverarbeitungsvorrichtung und einem Kommunikationsmedium sequentiell überqueren, wobei die besagten Synchronisationspakete während einer vorgegebenen Zeitdauer in der besagten Schnittstelle gespeichert und nach Ablauf der vorgegebenen Zeitdauer von der besagten Schnittstelle ausgegeben werden, wobei die besagte Zeitdauer mindestens gleich einem gegebenen Prozentanteil der Serialisierungszeit einer maximalen Übertragungseinheit der Kommunikationsschnittstelle ist.

**Revendications**

1. Équipement de réseau (6) adapté pour recevoir et transférer des paquets de données, ledit équipement comprenant :

   - un dispositif de traitement de paquets (75);

- une interface de communication (71, 73) connectée au dispositif de traitement de paquets et adaptée pour être connectée à un support de communication (21, 22), ladite interface de communication comprenant une mémoire tampon (72, 74) pour stocker des paquets de données provenant du support de communication ou devant être transmis à ce dernier ;

- dispositif de commande (76) adapté pour identifier un paquet de synchronisation stocké dans ladite mémoire tampon et appartenant à un flux de paquets de synchronisation donné, ledit dispositif de commande étant adapté pour garder les paquets de synchronisation dudit flux de paquets de synchronisation stockés à l'intérieur de la mémoire tampon durant une période prédéterminée, et pour délivrer en sortie lesdits paquets de synchronisation à la fin de la période prédéterminée, ladite période étant au moins égale à un pourcentage donné du temps de sérialisation d'une unité de transmission maximale de l'interface de communication.

2. Équipement de réseau (6) selon la revendication 1, dans lequel ladite période prédéterminée est au moins égale au temps de sérialisation d'une unité de transmission maximale de l'interface de communication.

3. Équipement de réseau (6) selon la revendication 1, ladite interface de communication gérant une qualité de service avec au moins une priorité de communication la plus élevée et une priorité de communication la plus basse, ladite période prédéterminée étant au moins égale au temps de sérialisation d'une unité de transmission maximale pour un paquet ayant la priorité la plus basse.

4. Équipement de réseau (6) selon l'une quelconque des revendications précédentes, dans lequel ledit dispositif de commande est adapté pour enregistrer la période de stockage prédéterminée du paquet de synchronisation dans un serveur distant.

5. Équipement de réseau (6) selon l'une quelconque des revendications précédentes, dans lequel ledit dispositif de commande est adapté pour détecter deux flux de paquets de synchronisation en conflit, ledit dispositif de commande étant en outre adapté pour définir différentes périodes de stockage prédéterminées pour lesdits deux flux de paquets de synchronisation ayant pour but de résoudre la situation de conflit précédente.

6. Équipement de réseau (6) selon la revendication 6, dans lequel lesdites différentes périodes de stockage prédéterminées sont des multiples d'une période de stockage de base.

7. Équipement de réseau (6) selon l'une quelconque des revendications précédentes, adapté pour enregistrer les valeurs de période de stockage des paquets de synchronisation dans un serveur distant.

8. Processus de gestion de paquets de synchronisation dans un équipement de réseau, dans lequel les paquets de synchronisation d'un flux de paquets de synchronisation traversent séquentiellement une interface de communication entre un dispositif de traitement de paquets et un support de communication, dans lequel lesdits paquets de synchronisation sont stockés dans ladite interface durant une période prédéterminée et sont délivrés en sortie depuis ladite interface à la fin de ladite période prédéterminée, ladite période étant au moins égale à un pourcentage donné du temps de sérialisation d'une unité de transmission maximale de l'interface de communication.

## Fig. 1

## Fig. 2

## Fig. 3

Fig. 4

Fig. 5

Fig. 6